# EUROPÄISCHE PATENTSCHRIFT

(11) **EP 1 928 678 B1**
(45) Veröffentlichungstag und Bekanntmachung des Hinweises auf die Patenterteilung: **22.07.2009**
(21) Anmeldenummer: 06792167.6
(22) Anmeldetag: 20.09.2006
(51) Int. Cl.: B60K 7/00, B60K 17/30, B62D 5/04, B62D 7/02

(54) **ANTRIEBSEINHEIT**
DRIVE UNIT
UNITE DE COMMANDE

(30) Priorität: 29.09.2005 DE 102005046616
(43) Veröffentlichungstag der Anmeldung: 11.06.2008
(73) Patentinhaber: ZF Friedrichshafen AG, 88038 Friedrichshafen (DE)
(72) Erfinder: SCHARFENBERG, Stephan, 99869 Tüttleben (DE); HABEL, Matthias, 99867 Gotha (DE); HEINRICH, Kai, 88285 Bodnegg (DE); PANTKE, Michael, 88046 Friedrichshafen (DE)
(86) Internationale Anmeldenummer: PCT/EP2006/009126
(87) Internationale Veröffentlichungsnummer: WO 2007/036314

(56) Entgegenhaltungen:
- EP-A- 1 241 038
- EP-A2- 0 999 081
- EP-A2- 1 502 792
- DE-A1- 10 328 651
- DE-A1- 10 343 857
- DE-A1- 19 904 552
- JP-A- 2002 321 665

## Beschreibung

Die Erfindung betrifft eine Antriebseinheit nach der im Oberbegriff von Anspruch 1 näher definierten Art.

Gattungsgemäße Antriebseinheiten sind z.B. aus der DE 103 28 651 A1 bekannt und werden häufig als Kompaktantriebe bezeichnet und weisen einen elektrischen Fahrmotor und einen elektrischen Lenkmotor auf, um ein Fahrzeugrad im Sinne einer Antriebsbewegung und einer Lenkbewegung anzutreiben.

Diese Antriebe werden vorzugsweise für elektrisch angetriebene Fahrzeuge, wie beispielsweise Flurförderzeuge, verwendet.

Die DE 103 28 651 A1 offenbart eine Antriebseinheit mit einem elektrischen Lenkmotor und einem elektrischen Fahrmotor, wobei der Lenkmotor und der Fahrmotor koaxial angeordnet sind und die Antriebswelle des Fahrmotors sich durch eine hohle Antriebswelle des Lenkmotors erstreckt, um über ein Untersetzungsgetriebe das Fahrzeugrad im Sinne eines Fahrantriebs anzutreiben.

Der vorliegenden Erfindung liegt die Aufgabe zugrunde, eine Antriebseinheit mit einem Fahrmotor und einem Lenkmotor zu schaffen, welche insbesondere in ihrer vertikalen Erstreckung kompakt bauend ausgeführt ist und das Fahrzeugrad über eine Bremse bremsbar ist.

Die Aufgabe wird mit einer, auch die kennzeichnenden Merkmale des Hauptanspruchs aufweisenden, gattungsgemäßen Antriebseinheit gelöst.

Erfindungsgemäß weist die Antriebseinheit einen Fahrmotor und einen Lenkmotor auf, wobei der Fahrmotor über eine Bremse mit einer elektromagnetischen Betätigungseinrichtung bremsbar und die Bremse unmittelbar benachbart zum Fahrmotor angeordnet ist. Die Bremse kann entweder im stromlosen Zustand geschlossen oder als Bremse ausgeführt sein, welche im stromlosen Zustand geöffnet ist.

Gemäß der Erfindung ist das Lagerschild des Fahrmotors aus einem magnetisch leitenden Werkstoff ausgebildet und mit der elektromagnetischen Betätigungseinrichtung der Bremse so verbunden, dass bei Betätigung der elektromagnetischen Bremseinrichtung die Bremse im Öffnungssinne betätigt wird. Dadurch ist es möglich, die Wicklung der Betätigungseinrichtung der Bremse direkt in das Lagerschild einzusetzen, so dass diese Wicklung mit isolierendem Material umgeben sein kann, welches vorzugsweise über einen Spritzvorgang oder durch druckloses Vergießen aufgebracht wird. Der Werkstoff ist elektrisch isolierend und magnetisch neutral ausgeführt. Um den Streufluß einzudämmen, besteht die Möglichkeit, begrenzende Schichten im Lagerschild oder unmittelbar angrenzend zum Lagerschild aus einem nichtmagnetischen Werkstoff auszubilden.

In einer Ausgestaltungsform der Erfindung steht die Antriebswelle des Fahrmotors mit einer Bremse mit einer Betätigungseinrichtung in Wirkverbindung, welche beispielsweise als Standardbremse ausgeführt sein kann; und unmittelbar benachbart zum Lagerschild des Fahrmotors angeordnet ist. Der Lagerschild des Fahrmotors ist dabei so ausgebildet, dass er eine topfförmige Vertiefung aufweist, in welcher die Bremse, zumindest teilweise, integriert angeordnet sein kann.

In einer weiteren Ausgestaltungsform der Erfindung ist hierbei die Wicklung des Fahrmotors so ausgebildet, dass der Innendurchmesser der Wickelköpfe des Fahrmotors so groß ist, dass die Bremse und die topfförmige Umrandung der Bremse, welche durch einen Teil des Lagerschilds gebildet wird, zwischen diesen Wickelköpfen angeordnet sein kann.

In einer weiteren Ausgestaltungsform der Erfindung sind der Lenkmotor und der Fahrmotor koaxial zueinander angeordnet, wobei der Lenkmotor, zumindest teilweise, im Bereich der Wicklung des Fahrmotors angeordnet sein kann. Der Lenkmotor weist hierbei eine Hohlwelle auf, in welcher die Antriebswelle des Fahrmotors angeordnet ist.

In einer weiteren Ausgestaltungsform der Erfindung weist die Bremse eine zentrische Bohrung auf, durch welche die Antriebswelle des Fahrmotors ragen kann, um ein Lüfterrad anzutreiben.

In einer weiteren Ausgestaltungsform der Erfindung ist eine elektronische Steuereinheit unmittelbar benachbart zur Bremse angeordnet, wobei die Bremse eine zentrische Öffnung aufweist, durch welche die Antriebswelle des Fahrmotors ragt, um einen mit der Antriebswelle in Wirkverbindung stehenden Sensor zwischen elektronischer Steuereinheit und Antriebswelle des Fahrmotors anzuordnen, wobei die elektronische Steuereinheit die Signale dieses Sensors, beispielsweise zur Drehzahlbestimmung des Antriebsmotors, verwendet.

In einer weiteren Ausgestaltungsform der Erfindung ist eine weitere elektronische Steuereinheit benachbart zum Lenkmotor angeordnet, welche den Lenkmotor steuert.

Weitere Merkmale sind der Figuren-Beschreibung zu entnehmen.

Es zeigen:

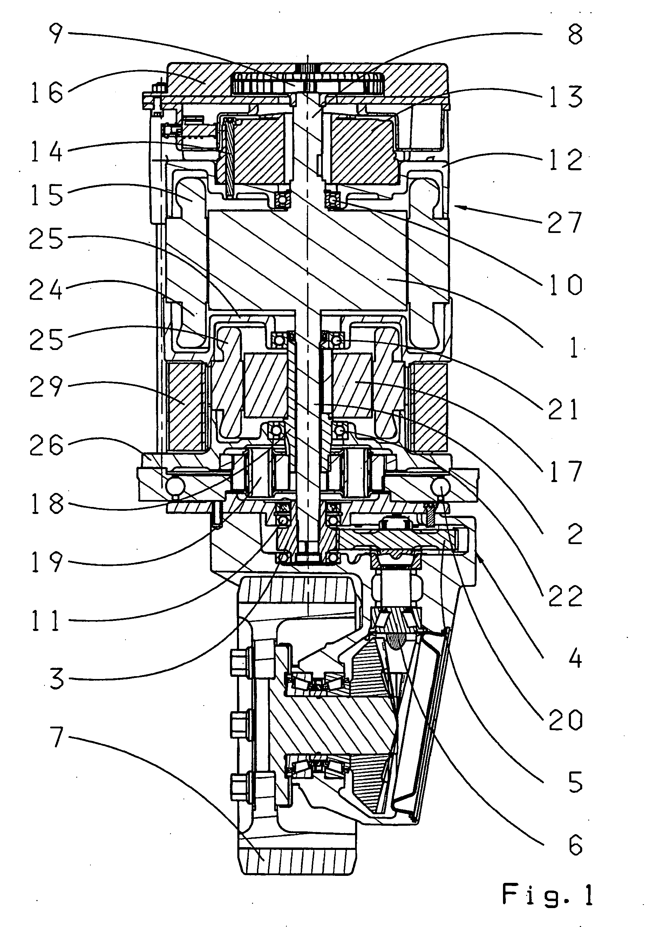

- Fig. 1: einen Schnitt durch eine Antriebseinheit mit einer in das Motorlagerschild integrierten Standardbremse und

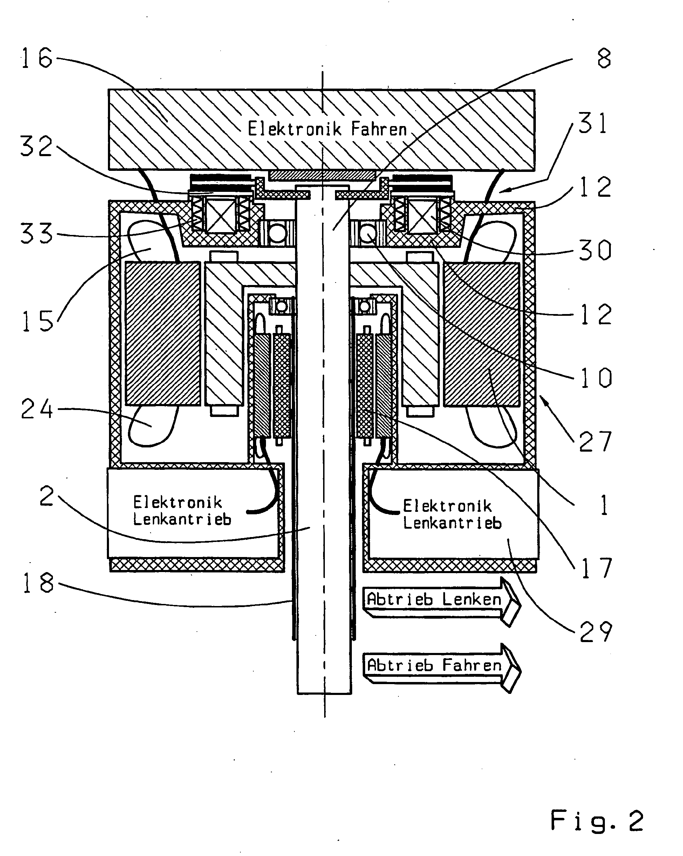

- Fig. 2: ein Schema einer Antriebseinheit mit einer Bremse, deren Wicklung direkt in das Lagerschild eingesetzt ist.

### Fig. 1:

Ein Fahrmotor 1 treibt über seine Antriebswelle 2 ein Stirnrad 3 eines Stirnradgetriebes 4 an. Die Antriebswelle 2 kann einstückig oder mehrstückig ausgeführt sein. Es besteht auch die Möglichkeit, das Stirnrad 3 mit der Antriebswelle 2 einstückig auszuführen. Das Stirnrad 3 treibt ein Stirnrad 5 an, welches über ein Kegelradgetriebe 6 das Antriebsrad 7 im Sinne einer Fahrbewegung antreibt. Der Fahrmotor 1 weist eine weitere Antriebswelle 8 auf, welche mit einem Lüfterrad 9 in drehfester Verbindung steht, um den Antrieb zu kühlen. Der Fahrmotor 1, bzw. sein Rotor, ist über eine Lagerung 10 und eine Lagerung 11 drehbar gelagert. Die Lagerung 10 ist in einem Lagerschild 12 angeordnet, welches topfförmig ausgebildet ist. Eine Bremse mit Betätigungseinrichtung, eine sogenannte Standardbremse 13, ist über Verbindungselemente 14 drehfest mit dem Lagerschild 12 verbunden. Beim Betätigen der Bremse 13 in Schließrichtung wird die Antriebswelle 8 zum Lagerschild 12 gebremst, wodurch der Antriebsmotor über die Antriebswelle 2 das Stirnradgetriebe 4 und das Kegelradgetriebe 6 das Antriebsrad 7 bremst. Das Lagerschild 12 ist so ausgebildet, dass die Bremse 13, zumindest teilweise, innerhalb der Wicklungsköpfe 15 angeordnet ist. Dazu ist das Lagerschild 12 so ausgebildet, dass es einerseits topfförmig um die Wicklungsköpfe 15 und andererseits topfförmig zur Aufnahme der Bremse 13 ausgebildet ist. Eine elek-tronische Steuereinheit 16 ist im Bereich des Lüfterrades 9 angeordnet und steuert den Fahrmotor 1. Ein Lenkmotor 17 ist koaxial zum Fahrmotor 1 angeordnet und treibt über eine hohle Antriebswelle 18 ein Wolfrom-Getriebe 19 an, wodurch das Antriebsrad 7 über die Lagerung 20 eine Lenkbewegung ausführen kann. Die Antriebswelle 18 ist über die Lagerung 21 und 22 gelagert. Das Lagerschild 23, welches die Lagerung 21 aufnimmt, ist zwischen dem Lenkmotor 17 und dem Fahrmotor 1 angeordnet, und einerseits topfförmig um die Wicklungsköpfe 24 des Fahrmotors 1 und topfförmig um die Wicklungsköpfe 25 des Lenkmotors 17 ausgebildet, so dass der Lenkmotor in den Fahrmotor hineinragen kann. Das Lagerschild 26 des Lenkmotors 17 bildet einerseits das Abschlußteil des oberen Gehäuses 27, welches aus einzelnen Segmenten besteht, und über Verbindungselemente 28 zusammengehalten wird, und andererseits den Träger für das äußere Zentralrad des Wolfrom-Getriebes 19. Eine elektronische Steuereinheit 29 ist im Bereich des Lenkmotors 17 angeordnet und steuert den Lenkmotor 17.

### Fig. 2:

Das Lagerschild 12 ist aus magnetisch leitendem Werkstoff ausgeführt, so dass die Wicklung 30 der Bremse 31 direkt in das Lagerschild 12 eingesetzt werden kann. Dabei wird die Wicklung 30 mit elektrisch isolierendem Material umspritzt. Beim Bestromen der Wicklung 30 wird eine Druckplatte 32 gegen eine Federkraft der Feder 33 gezogen, wodurch die Bremse 31 im Öffnungssinne betätigt wird. Beim Stromlosschalten der Wicklung 30 drücken die Federn 33 gegen die Bremse, wodurch diese im Schließsinne betätigt wird. Somit wird die Antriebswelle 8 gegen das Gehäuse 27 gebremst.

### Bezugszeichen

- 1: Fahrmotor
- 2: Antriebswelle 2
- 3: Stirnrad
- 4: Stirnradgetriebe
- 5: Stirnrad
- 6: Kegelradgetriebe
- 7: Antriebsrad
- 8: Antriebswelle 3
- 9: Lüfterrad
- 10: Lagerung
- 11: Lagerung
- 12: Lagerschild
- 13: Bremse
- 14: Verbindungselemente
- 15: Wicklungsköpfe
- 16: elektronische Steuereinheit
- 17: Lenkmotor
- 18: Antriebswelle
- 19: Wolfrom-Getriebe
- 20: Lagerung
- 21: Lagerung
- 22: Lagerung
- 23: Lagerschild
- 24: Wicklungsköpfe
- 25: Wicklungsköpfe
- 26: Lagerschild
- 27: Gehäuse
- 28: Verbindungselemente
- 29: elektronische Steuereinheit
- 30: Wicklung
- 31: Bremse
- 32: Druckplatte
- 33: Federn

## Patentansprüche

1. Antriebseinheit mit einem Fahrmotor (1) und einem Lenkmotor (17), mit einer Bremse (13), welche über eine Welle (8), welche mit dem Fahrmotor (1) in Verbindung steht, über eine Betätigungseinrichtung, welche die Bremse (13) elektromagnetisch im Öffnungssinne und über Federkraft im Schließsinne betätigt, bremsbar ist, mit einem Lagerschild (12), in welchem der Fahrmotor (1) gelagert ist, **dadurch gekennzeichnet, dass** das Lagerschild (12) aus einem magnetisch leitenden Werkstoff besteht und mit der elektromagnetischen Betätigungseinrichtung so verbunden ist, dass bei Betätigung der elektromagnetischen Betätigungseinrichtung die Bremse (13) im Öffnungssinne betätigt wird, wobei der Lenkmotor (17) und der Fahrmotor (1) und die Bremse (13) und ein Lüfterrad (9) koaxial zueinander angeordnet sind, und die Bremse (13) eine zentrische Bohrung aufweist, durch welche das Lüfterrad (9) angetrieben wird.

2. Antriebseinheit nach Anspruch 1, **dadurch gekennzeichnet, dass** der Lenkmotor (17) und der Fahrmotor (1) koaxial zueinander angeordnet sind, wobei der Fahrmotor (1) zwischen dem Lenkmotor (17) und der Bremse (13) angeordnet ist.

3. Antriebseinheit nach Anspruch 1, **dadurch gekennzeichnet, dass** eine Wicklung (30) der elektromagnetischen Betätigungseinrichtung direkt benachbart zum Lagerschild (12) angeordnet und mit einem elektrisch isolierenden Material umspritzt ist.

4. Antriebseinheit nach Anspruch 1, **dadurch gekennzeichnet, dass** das Lagerschild (12) in Richtung der Wicklung (15) des Fahrmotors (1) topfförmig ausgebildet ist, und die Bremse (13), zumindest teilweise, innerhalb des Topfes angeordnet ist, wobei die Topfwandung, zumindest teilweise, zwischen der Wicklung des Fahrmotors (1) und der Bremse (13) angeordnet ist.

5. Antriebseinheit nach Anspruch 1, **dadurch gekennzeichnet, dass** die Bremse (13) über Verbindungselemente mit dem Lagerschild (12) drehfest verbunden ist.

6. Antriebseinheit nach Anspruch 1, **dadurch gekennzeichnet, dass** der Lenkmotor (17) eine Antriebswelle (18) aufweist, welche rohrförmig ausgebildet ist, und innerhalb welcher die Antriebswelle (2) des Fahrmotors (1) angeordnet ist.

7. Antriebseinheit nach Anspruch 1, **dadurch gekennzeichnet, dass** im Bereich der Bremse (13) eine elektronische Steuereinheit (16) integriert angeordnet ist.

8. Antriebseinheit nach Anspruch 1, **dadurch gekennzeichnet, dass** die Bremse (13) zwischen dem Fahrmotor (1) und einer Kühleinrichtung (9) angeordnet ist.

9. Antriebseinheit nach Anspruch 1, **dadurch gekennzeichnet, dass** der Fahrmotor (1) über ein Stirnradgetriebe (4) und ein Kegelradgetriebe (6) ein Fahrzeugrad (7) im Sinne eines Fahrantriebs antreibt, und der Lenkmotor (17) über ein Lenkgetriebe (19) das Fahrzeugrad (7) im Sinne einer Lenkbewegung antreibt.

## Claims

1. Drive unit having a traction motor (1) and a steering motor (17), having a brake (13) which can be braked via a shaft (8), which is connected to the traction motor (1), by means of an operating device which operates the brake (13) electromagnetically so as to open and via spring force so as to close, having an end plate (12) in which the traction motor (1) is mounted, **characterized in that** the end plate (12) is composed of a magnetically conductive material and is connected to the electromagnetic operating device such that, when the electromagnetic operating device is operated, the brake (13) is operated so as to open, with the steering motor (17) and the traction motor (1) and the brake (13) and a fan impeller (9) being arranged coaxially to one another, and the brake (13) having a central hole through which the fan impeller (9) is driven.

2. Drive unit according to Claim 1, **characterized in that** the steering motor (17) and the traction motor (1) are arranged coaxially to one another, with the traction motor (1) being arranged between the steering motor (17) and the brake (13).

3. Drive unit according to Claim 1, **characterized in that** a winding (30) of the electromagnetic operating device is arranged directly adjacent to the end plate (12) and is extrusion-coated with an electrically insulating material.

4. Drive unit according to Claim 1, **characterized in that** the end plate (12) is of pot-like design in the direction of the winding (15) of the traction motor (1), and the brake (13) is arranged, at least partially, within the pot, with the pot wall being arranged, at least partially, between the winding of the traction motor (1) and the brake (13).

5. Drive unit according to Claim 1, **characterized in that** the brake (13) is connected to the end plate (12) in a rotationally fixed manner by means of connecting elements.

6. Drive unit according to Claim 1, **characterized in that** the steering motor (17) has a drive shaft (18) which is of tubular design and the drive shaft (2) of the traction motor (1) is arranged within the said drive shaft of the steering motor.

7. Drive unit according to Claim 1, **characterized in that** an electronic control unit (16) is arranged in an integrated fashion in the region of the brake (13).

8. Drive unit according to Claim 1, **characterized in that** the brake (13) is arranged between the traction motor (1) and a cooling device (9).

9. Drive unit according to Claim 1, **characterized in that** the traction motor (1) drives a vehicle wheel (7) via a spur gear mechanism (4) and a bevel gear mechanism (6) for the purpose of traction driving, and the steering motor (17) drives the vehicle wheel (7) via a steering gear mechanism (19) for the purpose of a steering movement.

## Revendications

1. Unité de commande avec un moteur de traction (1) et un moteur de direction (17), avec un frein (13), qui peut être freiné par l'intermédiaire d'un arbre (8) qui est en liaison avec le moteur de traction (1), au moyen d'un dispositif d'actionnement qui actionne le frein (13) par voie électromagnétique dans le sens de l'ouverture et par la force d'un ressort dans le sens de la fermeture, avec un flasque (12), dans lequel le moteur de traction (1) est appuyé, **caractérisée en ce que** le flasque (12) est composé d'un matériau magnétiquement conducteur et est relié au dispositif d'actionnement électromagnétique de telle manière que, lors de l'actionnement du dispositif d'actionnement électromagnétique, le frein (13) soit actionné dans le sens de l'ouverture, dans laquelle le moteur de direction (17) et le moteur de traction (1) et le frein (13) et une roue de ventilateur (9) sont disposés de manière coaxiale l'un par rapport à l'autre, et le frein (13) présente un alésage central, à travers lequel la roue de ventilateur (9) est entraînée.

2. Unité de commande selon la revendication 1, **caractérisée en ce que** le moteur de direction (17) et le moteur de traction (1) sont disposés de manière coaxiale l'un par rapport à l'autre, dans laquelle le moteur de traction (1) est disposé entre le moteur de direction (17) et le frein (13).

3. Unité de commande selon la revendication 1, **caractérisée en ce qu'**un enroulement (30) du dispositif d'actionnement électromagnétique est disposé à proximité immédiate du flasque (12) et est enrobé par projection d'une matière électriquement isolante.

4. Unité de commande selon la revendication 1, **caractérisée en ce que** le flasque (12) est façonné en forme de godet en direction de l'enroulement (15) du moteur de traction (1), et le frein (13) est disposé, au moins en partie, à l'intérieur du godet, dans laquelle la paroi du godet est disposée, au moins en partie, entre l'enroulement du moteur de traction (1) et le frein (13).

5. Unité de commande selon la revendication 1, **caractérisée en ce que** le frein (13) est assemblé de façon solidaire en rotation avec le flasque (12), au moyen d'éléments de liaison.

6. Unité de commande selon la revendication 1, **caractérisée en ce que** le moteur de direction (17) comprend un arbre de commande (18), qui est de forme tubulaire et à l'intérieur duquel est disposé l'arbre de commande (2) du moteur de traction (1).

7. Unité de commande selon la revendication 1, **caractérisée en ce qu'**une unité de commande électronique intégrée (16) est disposée dans la région du frein (13).

8. Unité de commande selon la revendication 1, **caractérisée en ce que** le frein (13) est disposé entre le moteur de traction (1) et un dispositif de refroidissement (9).

9. Unité de commande selon la revendication 1, **caractérisée en ce que** le moteur de traction (1) entraîne une roue de véhicule (7) au sens d'une commande de traction, au moyen d'un engrenage droit (4) et d'un engrenage à pignons coniques (6), et le moteur de direction (17) entraîne la roue de véhicule (7) au sens d'un mouvement de direction au moyen d'un mécanisme de direction (19).
